(19) **Europäisches Patentamt**
**European Patent Office**
**Office européen des brevets**

(11) **EP 4 550 276 A1**

(12) **EUROPEAN PATENT APPLICATION**
published in accordance with Art. 153(4) EPC

(43) Date of publication:
07.05.2025 Bulletin 2025/19

(51) International Patent Classification (IPC):
*G06V 20/52* (2022.01)

(21) Application number: 23830148.5

(22) Date of filing: 25.06.2023

(52) Cooperative Patent Classification (CPC):
G06V 10/10; G06F 3/06; G06V 10/25; H04N 23/95;
H04N 25/47

(86) International application number:
PCT/CN2023/102176

(87) International publication number:
WO 2024/001970 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.06.2022 CN 202210778563

(71) Applicants:
• Tsinghua University
Beijing 100084 (CN)
• Huawei Technologies Co., Ltd.
Shenzhen, Guangdong 518129 (CN)

(72) Inventors:
• WANG, Yaoyuan
Shenzhen, Guangdong 518129 (CN)

• LONG, Mingsheng
Beijing 100084 (CN)
• YOU, Kaichao
Shenzhen, Guangdong 518129 (CN)
• ZHANG, Ziyang
Shenzhen, Guangdong 518129 (CN)
• WANG, Ying
Shenzhen, Guangdong 518129 (CN)
• ZHAN, Yunlong
Shenzhen, Guangdong 518129 (CN)
• WANG, Jianmin
Beijing 100084 (CN)

(74) Representative: Körber, Martin Hans
Mitscherlich PartmbB
Patent- und Rechtsanwälte
Karlstraße 7
80333 München (DE)

(54) **EVENT DATA PROCESSING METHOD AND RELATED DEVICE**

(57) This application provides an event data processing method, including: obtaining event data shot by an event camera, where the event data includes a timestamp of occurrence of an event, pixel coordinates, and a brightness change status; and generating an event frame matrix based on a plurality of pieces of event data within a preset time period, where a location of a matrix element in the event frame matrix corresponds to pixel coordinates, a value of the matrix element indicates whether there is an event at a corresponding pixel and an event polarity of a pixel with an event, if there is an event at the pixel, it indicates that brightness of the pixel is changed within the preset time period, or if there is no event at the pixel, it indicates that brightness of the pixel is not changed within the preset time period, and the event polarity includes increased brightness and decreased brightness. In this way, all event data of the pixel coordinates within the preset time period does not need to be recorded one by one, thereby reducing an amount of data that needs to be recorded.

FIG. 3

## Description

This application claims priority to Chinese Patent Application No. 202210778563.8, filed with the China National Intellectual Property Administration on June 30, 2022 and entitled "EVENT DATA PROCESSING METHOD AND RELATED DEVICE", which is incorporated herein by reference in its entirety.

## TECHNICAL FIELD

This application relates to the field of computers, and in particular, to an event data processing method and a related device.

## BACKGROUND

An event camera (event camera) detects a light intensity change within a shooting range through a sensor, and then outputs pixel coordinates at which a brightness change occurs, a timestamp, and a positive/negative polarity of the brightness change as event data. When brightness of a large quantity of pixels is changed due to object movement or an illumination change in a scene, a series of events are generated, and these events are output in a form of an event stream (Event stream).

However, temporal resolution of the event data obtained by the event camera is usually at a microsecond level. Therefore, a large amount of data is obtained, and a large amount of storage space is occupied. In addition, the event data is stored on a per-pixel basis. If only an event at a pixel in a region needs to be read, all the event data needs to be traversed. This increases difficulty in processing the event data and reduces efficiency of processing the event data.

Therefore, how to reduce the storage space occupied by the event data and improve efficiency of reading the event data is an urgent problem to be resolved.

## SUMMARY

This application provides an event data processing method and a related device, to reduce storage space occupied by event data and improve efficiency of reading the event data.

According to a first aspect, an event data processing method is provided and includes: A first electronic device obtains event data shot by an event camera, where the event data includes a timestamp of occurrence of an event, pixel coordinates, and a brightness change status; and the first electronic device generates an event frame matrix based on a plurality of pieces of event data within a preset time period, where a location of a matrix element in the event frame matrix corresponds to pixel coordinates, a value of the matrix element indicates whether there is an event at a corresponding pixel and an event polarity of a pixel with an event, if there is an event at the pixel, it indicates that brightness of the pixel is changed within the preset time period, or if there is no event at the pixel, it indicates that brightness of the pixel is not changed within the preset time period, and the event polarity includes increased brightness and decreased brightness.

In the foregoing solution, an event polarity of pixel coordinates may represent event data of a pixel within the preset time period, and there is no need to record all event data of the pixel coordinates within the preset time period one by one, thereby reducing an amount of recorded data. For example, if brightness of a pixel is first increased and then decreased within the preset time period, only a result indicating that the brightness of the pixel is not changed needs to be stored in the event frame matrix, and there is no need to store all event data within the preset time period one by one, thereby reducing an amount of data that needs to be stored.

With reference to the first aspect, in some implementations, the preset time period ranges from 1 millisecond to 100 milliseconds.

In the foregoing solution, the preset time period may be set based on a requirement in an application scenario, and may specifically range from 1 millisecond to 100 milliseconds. For an application scenario with a high precision requirement, the preset time may be set to be short. For an application scenario with a low precision requirement, the preset time may be set to be long. In this way, the preset time period can meet a precision requirement in an application scenario, and can be used to reduce an amount of data that needs to be stored.

With reference to the first aspect, in some implementations, the first electronic device determines, based on a quantity of pixels, a size of storage space occupied for storing the event frame matrix in each of a plurality of preset storage manners; the first electronic device determines a manner in which a smallest amount of storage space is occupied for storing the event frame matrix from the plurality of preset storage manners; and the first electronic device stores the event frame matrix in the manner in which a smallest amount of storage space is occupied for storing the event frame matrix.

In the foregoing solution, the first electronic device provides a plurality of storage manners, and can determine, based on the quantity of pixels in the event frame matrix, the storage manner in which a smallest amount of storage space is occupied, to store the event frame matrix. In this way, a most appropriate storage manner can be selected based on a status of each event frame matrix, thereby reducing space occupied for storing the event frame matrix.

With reference to the first aspect, in some implementations, a second electronic device obtains a region of interest RoI; and the second electronic device reads whether there is an event at a pixel in the RoI or an event polarity of a pixel with an event from the first electronic device based on the RoI and the manner of storing the event frame matrix.

In the foregoing solution, the second electronic device can directly determine a to-be-read pixel range from the event frame matrix based on the RoI, and then read whether there is an event at the pixel in the RoI and a specific event polarity. In this way, the second electronic device does not need to traverse the event data to sequentially determine whether coordinates of each piece of event data fall within the RoI. In this way, efficiency of reading the event polarity of the pixel in the RoI is improved.

With reference to the first aspect, in some implementations, the preset storage manner includes that the first electronic device stores coordinates and an event polarity of a pixel with an event in the event frame matrix.

In the foregoing solution, the first electronic device stores the event data within the preset time period based on pixel coordinates, so that the location of the matrix element in the event frame matrix corresponds to the pixel coordinates, and the value of the matrix element indicates whether there is an event at the corresponding pixel and the event polarity of the pixel with an event. In this way, when an event polarity of a pixel is read, an event polarity of a pixel that needs to be read can be read based on the pixel coordinates, thereby improving efficiency of reading the event polarity of the pixel in the RoI. In addition, only the coordinates and the event polarity of the pixel with an event are stored, and there is no need to sequentially store all pixels, thereby reducing an amount of data that needs to be stored.

With reference to the first aspect, in some implementations, the second electronic device determines a matrix element coordinate range corresponding to the RoI in the event frame matrix based on the RoI; and the second electronic device reads coordinates and the event polarity of the pixel with an event in the RoI from the first electronic device based on the matrix element coordinate range.

In the foregoing solution, when an event polarity of a pixel is read, an event polarity of a pixel that needs to be read can be read based on the pixel coordinates, and the second electronic device does not need to traverse the event data to sequentially determine whether coordinates of each piece of event data fall within the RoI. In this way, efficiency of reading the event polarity of the pixel in the RoI is improved, and efficiency of reading the event polarity of the pixel in the RoI is improved.

With reference to the first aspect, in some implementations, the preset storage manner includes that the first electronic device stores a quantity of pixels with an event in each row and all previous rows in the event frame matrix, and a column coordinate and an event polarity of a pixel with an event in the event frame matrix; or the first electronic device stores a quantity of pixels with an event in each row in the event frame matrix, and a column coordinate and a corresponding event polarity of a pixel with an event in the event frame matrix.

In the foregoing solution, storage is performed based on the quantity of pixels with an event in each row, and the column coordinate and the event polarity of the pixel with an event, and there is no need to sequentially store all pixels with an event, thereby reducing an amount of data that needs to be stored.

With reference to the first aspect, in some implementations, the second electronic device determines, based on the event frame matrix, a row intersecting with the RoI, and reads a quantity of pixels with an event in the row intersecting with the RoI; and the second electronic device reads a column coordinate and the event polarity of the pixel with an event in the RoI from the first electronic device based on the quantity of pixels with an event in the row intersecting with the RoI, to obtain coordinates and the event polarity of the pixel with an event in the RoI.

In the foregoing solution, a quantity of pixels with an event in first i rows may be stored, or a quantity of pixels with an event in an $i^{th}$ row can be stored. When the quantity of pixels with an event in the first i rows is stored, a row that needs to be read is determined to determine a storage location of a column coordinate and an event polarity of a pixel with an event in an $i^{th}$ row. When the quantity of pixels with an event in the $i^{th}$ row is stored, a row that needs to be read is determined and quantities of pixels with an event in first i rows are added to determine a storage location of a column coordinate and an event polarity of the pixel with an event in the $i^{th}$ row. The second electronic device does not need to traverse the event data to sequentially determine whether coordinates of each piece of event data fall within the RoI. In this way, efficiency of reading the event polarity of the pixel in the RoI is improved, and efficiency of reading the event polarity of the pixel in the RoI is improved.

With reference to the first aspect, in some implementations, the preset storage manner includes that the first electronic device divides the event frame matrix into a plurality of submatrices based on the event frame matrix, and stores a total size of storage space occupied by a previous submatrix and all previous submatrices, and coordinates and an event polarity of a pixel with an event in each submatrix; or the first electronic device stores a size of storage space occupied by each submatrix, and coordinates and an event polarity of a pixel with an event in each submatrix.

In the foregoing solution, the event frame matrix is divided into a plurality of submatrices for storage. A size of storage space occupied by first m submatrices may be sequentially stored, or a size of storage space occupied by an $m^{th}$ submatrix may be sequentially stored, and then the coordinates and the event polarity of the pixel with an event in each submatrix are stored. In this way, when the coordinates and the event polarity of the pixel with an event in the submatrix are stored, because a data amount is less than a data amount of the complete event frame matrix, a maximum quantity of bits for storing each piece of data is small, thereby reducing an amount of data that needs to be stored.

With reference to the first aspect, in some implementations, the second electronic device determines, based on the RoI, a submatrix intersecting with the RoI and a size of storage space occupied by the submatrix intersecting with the RoI; the second electronic device determines, based on the size of storage space of the submatrix intersecting with the RoI, a storage location for storing data of the submatrix intersecting with the RoI; and the second electronic device reads coordinates and an event polarity of a pixel with an event in the submatrix intersecting with the RoI from the first electronic device based on the storage location, to obtain coordinates and the event polarity of the pixel with an event in the RoI.

In the foregoing solution, when the size of storage space occupied by the first m submatrices is sequentially stored, an $m^{th}$ number and an $(m+1)^{th}$ number are read to determine a storage location of coordinates and an event polarity of a pixel with an event in an $m^{th}$ submatrix. When the size of storage space occupied by the $m^{th}$ submatrix is sequentially stored, first m numbers and an $(m+1)^{th}$ number are added to determine a storage location of coordinates and an event polarity of a pixel with an event in the $m^{th}$ submatrix. In this way, the second electronic device does not need to traverse the event data to sequentially determine whether coordinates of each piece of event data fall within the RoI. This improves efficiency of reading the event polarity of the pixel in the RoI, and improves efficiency of reading the event polarity of the pixel in the RoI.

With reference to the first aspect, in some implementations, the preset storage manner includes that the first electronic device stores the event frame matrix.

In the foregoing solution, the complete event frame matrix may be directly stored. The event frame matrix is stored based on pixel coordinates and an event polarity. Therefore, when some data of the event frame matrix is read, data of a low pixel that needs to be read can be directly read by using coordinates of a matrix element in the event frame matrix.

With reference to the first aspect, in some implementations, the second electronic device determines a matrix element coordinate range corresponding to the RoI in the event frame matrix based on the RoI; and the second electronic device reads whether there is an event at each pixel in the RoI and the event polarity of the pixel with an event from the first electronic device based on the matrix element coordinate range.

In the foregoing solution, data of each pixel is stored based on coordinates of the pixel. Therefore, when data within the RoI range is read, an event polarity of a pixel that needs to be read can be directly read based on the matrix element coordinate range corresponding to the RoI.

With reference to the first aspect, in some implementations, the second electronic device marks a pixel without an event as brightness not changed based on the coordinates and the event polarity of the pixel with an event in the RoI, to learn whether there is an event at each pixel in the RoI and the event polarity of the pixel with an event.

In the foregoing solution, when only the coordinates and the event polarity of the pixel with an event are stored, before a reading result is output, a pixel without an event within a reading range may be marked as brightness not changed and output together.

According to a second aspect, this application provides an electronic device, including a processor and a memory. The memory is configured to store instructions, the processor is configured to execute the instructions, and when the processor executes the instructions, the method according to the first aspect is performed.

According to a third aspect, this application provides a computer-readable storage medium. The computer-readable storage medium stores instructions, and when the instructions are run on an electronic device, the method according to the first aspect is performed.

According to a fourth aspect, this application provides a computer program product. The computer program product includes computer instructions, and when the computer instructions are executed by a computing device, the computing device performs the method according to the first aspect.

In conclusion, according to the event data processing method and the related device provided in this application, event data within a preset time period is obtained, statistics on a brightness change of each pixel within the preset time period are collected, to obtain an overall brightness change result of each pixel, and then overall brightness change results corresponding to all the pixels are stored as an event frame matrix based on locations of the pixels. In this way, a data amount is reduced, thereby reducing occupied storage space. Then, a storage manner in which a smallest amount of space is occupied for storing the event frame matrix is determined based on the event frame matrix. This can also reduce the occupied storage space. In addition, the event frame matrix is stored based on coordinates of a matrix element in the event frame matrix. Therefore, when some data of the event frame matrix is read, there is no need to traverse all stored data, and a storage location of the matrix element coordinates and an event polarity can be directly determined based on a range that needs to be read, thereby improving efficiency of reading the event data.

## BRIEF DESCRIPTION OF DRAWINGS

To describe the technical solutions in embodiments of this application more clearly, the following briefly describes the accompanying drawings required for describing embodiments.

FIG. 1A is a diagram of a surveillance picture according to an embodiment of this application;

FIG. 1B is a diagram of a grayscale image generated by an event camera according to an embodiment of this application;

FIG. 2 is a diagram of a system structure for performing an event data processing method according to an embodiment of this application;

FIG. 3 is a schematic flowchart of an event data processing method according to an embodiment of this application;

FIG. 4 is a schematic flowchart of another event data processing method according to an embodiment of this application;

FIG. 5 is a diagram of a structure of an event data processing system according to an embodiment of this application; and

FIG. 6 is a diagram of a structure of an electronic device according to an embodiment of this application.

## DESCRIPTION OF EMBODIMENTS

The following describes specific implementations of this application in detail with reference to the accompanying drawings.

For ease of understanding, an event camera application technology in this application is first described.

An event camera (event camera) detects a light intensity change within a shooting range through a sensor, and then outputs pixel coordinates at which a brightness change occurs, a timestamp, and a positive/negative polarity of the brightness change as event data. Specifically, brightness value changes of all pixels are continuously obtained through a photosensitive device within a continuous moment. When a brightness value at a location of a pixel is changed, and the brightness change reaches a specific threshold, the camera outputs event data.

A threshold for pixel brightness is a preset value of the event camera, and the event data may be represented by using elements x, y, t, and p. Herein, x and y are used for a location at which an event occurs, that is, pixel coordinates, t is a timestamp of occurrence of the event, and P represents a pixel brightness change status, including that brightness is increased and brightness is decreased. In conclusion, $(x,y,p,t)$ may represent that brightness of a specific pixel is increased or decreased at a specific moment.

When brightness of a large quantity of pixels is changed due to object movement or an illumination change in a scene, a series of events are generated, and these events are output in a form of an event stream (Event stream). For example, when there are N events, the event stream may be represented by using $(x_k, y_k, p_k, t_k)_{k=1}^{N}$, where k and N are positive integers. After a specific quantity of event streams are accumulated, an event frame may be generated, and the event frame can reflect an overall brightness change status of each pixel within the time period.

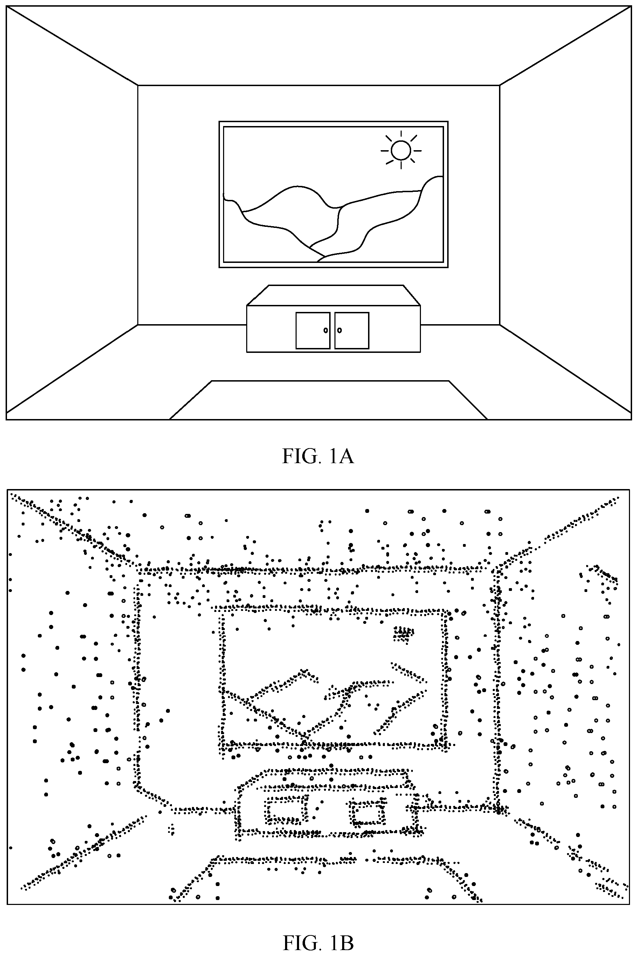

There are mainly two types of event cameras: a dynamic vision sensor (Dynamic Vision Sensor, DVS) camera and a dynamic and active pixel vision sensor (Dynamic and Active Pixel Vision Sensor, DAVIS) camera. The DVS camera is a common event camera that transmits only event data. The DAVIS camera can transmit both event data and a grayscale image or a color image. The event camera can shoot an event at a high frame rate, and temporal resolution of the event data output by the event camera is at a microsecond level. Therefore, the event camera features a low time delay and a large dynamic range (that is, a large difference between lightness and darkness), and can be used in self-driving, uncrewed aerial vehicle visual navigation, industrial detection, video surveillance, and other machine vision fields. FIG. 1A is a diagram of a scene of a surveillance picture when the event camera is used in video surveillance. When brightness of a large quantity of pixels is changed due to an illumination change in the scene, a series of event data is generated, and an event frame is finally generated after a specific time. FIG. 1B shows a grayscale image determined based on the event frame, where a dark pixel indicates that brightness of the pixel is increased within the time period, and a light pixel indicates that brightness of the pixel is decreased within the time period.

However, currently, because the temporal resolution of the event data obtained by the event camera is excessively high, and is usually at the microsecond level, an excessively large amount of event data is obtained, and a large amount of storage space is occupied. In addition, the event data is stored based on an event occurrence time by using an event at a single pixel. If only an event at a pixel within a coordinate range needs to be read, all the event data needs to be traversed. This increases difficulty in processing the event data and reduces efficiency of processing the event data.

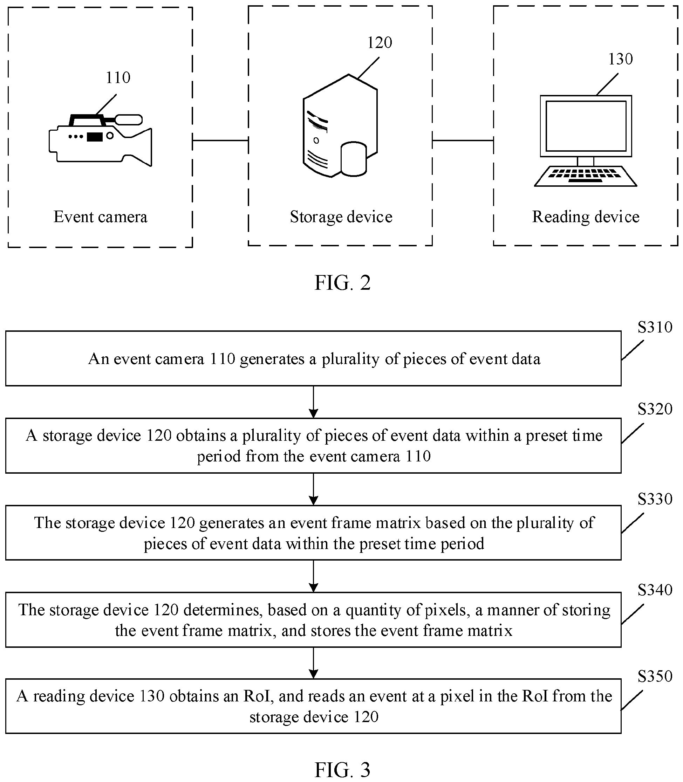

To resolve a problem that event data occupies a large amount of storage space and efficiency of reading the event data is low, this application provides an event data processing method. The event data processing method may be applied to a system architecture shown in FIG. 2. The architecture includes an event camera (event camera) 110, a storage device 120, and a reading device 130. The storage device 120 may also be referred to as a first electronic device, and the reading device 130 may also be referred to as a second electronic device.

The event camera 110 is configured to: detect a light intensity change within a shooting range through a sensor, and then output pixel coordinates at which a brightness change occurs, a timestamp, and a brightness change status as event data. For details, refer to the foregoing detailed descriptions of the event camera. Details are not described herein.

The storage device 120 includes a memory and a processor. The processor is configured to: obtain the event data from the event camera 110, record event data of a pixel within a preset time period as an event polarity of the pixel, and then generate an event frame matrix within the preset time period, where the event frame matrix includes an event polarity and pixel coordinates of each pixel. The processor is further configured to: select a storage manner in which a smallest amount of space is occupied for storing the event frame matrix from a plurality of preset storage manners, and then send the event frame matrix to the memory. The memory stores the event frame matrix in the storage manner selected by the processor. The storage device may be a physical server or a cloud device, for example, an X86 server, an ARM server, or the like, or may be a terminal, for example, a mobile phone, a tablet computer, a wearable device, a VR device, a vehicle-mounted device, a notebook computer, an ultra-mobile personal computer (ultra-mobile personal computer, UMPC), a netbook, a personal digital assistant (personal digital assistant, PDA), or the like. A specific type of the storage device 120 is not limited in this application.

The reading device 130 is configured to read the event frame matrix from the storage device 120. In some embodiments, the reading device 130 is further configured to: obtain a region of interest (Region of Interest, RoI) selected by a user from a picture shot by the event camera, or obtain an RoI obtained after an application program or another electronic device performs image processing on a picture shot by the event camera. The reading device 130 can read an event polarity of a pixel within a range of the RoI from the storage device 120 based on the RoI and the manner of storing the event frame matrix. After the reading device 130 reads data, the reading device 130 or another device can perform further image processing or complete another operation. The reading device 130 may be a mobile phone, a tablet computer, a wearable device, a VR device, a vehicle-mounted device, a notebook computer, a UMPC, a netbook, a PDA, or the like. A specific type of the reading device 130 is not limited in this application.

It should be understood that the system structure may further include another device, or the devices in the foregoing application scenario may be combined or split based on a requirement. For example, in some embodiments, the storage device 120 may be a memory and a processor in the event camera. After the event camera generates event data, the processor directly generates an event frame matrix, determines a storage manner, and then stores the event frame matrix in the memory. Alternatively, the storage device 120 is a memory in the reading device 130. After the event camera sends event data to the reading device 130, a processor in the reading device 130 generates an event frame matrix, determines a storage manner, and then stores the event frame matrix in the memory. When the reading device 130 needs to use the event data, the event frame matrix is read from the memory.

The event data processing method provided in this application is described below in detail with reference to FIG. 3.

To resolve a problem that event data occupies a large amount of storage space and efficiency of reading the event data is low, this application provides an event data processing method. In the method, a storage device 120 obtains event data within a preset time period from an event camera 110, and records an overall brightness change status of each pixel within the preset time period as an event polarity, to obtain an event frame matrix, where the event polarity includes increased brightness and decreased brightness, and if brightness of a pixel is not changed, there is no event. A location of each matrix element in the event frame matrix corresponds to pixel coordinates, and a value of the matrix element corresponds to whether there is an event at a pixel and a specific event polarity. In this way, an event polarity of pixel coordinates may represent event data of a pixel within the preset time period, and there is no need to record all event data of the pixel coordinates within the preset time period one by one, thereby reducing an amount of recorded data. For example, if brightness of a pixel is first increased and then decreased within the preset time period, only a result indicating that the brightness of the pixel is not changed needs to be stored in the event frame matrix, and there is no need to store all event data within the preset time period one by one, thereby reducing an amount of data that needs to be stored.

In addition, when storing the event frame matrix, the storage device 120 may select a storage manner in which a smallest amount of space is occupied from a plurality of preset storage manners, to store the event frame matrix. This can further reduce storage space occupied by the event data. The method for storing the event frame matrix includes: storing coordinates and an event polarity of a matrix element with an event in the event frame matrix; or storing an accumulated quantity of matrix elements with an event in each row and all previous rows of the row in the event frame matrix, and a column coordinate and a corresponding event polarity of a matrix element with an event in the event frame matrix; or dividing the event frame matrix into a plurality of submatrices, first determining a storage manner of storing the submatrix and a size of storage space that needs to be occupied for storing the submatrix, then storing coordinates of a location at which each submatrix is stored in the storage space, and storing a matrix element with an event and a corresponding event polarity in each submatrix in the determined storage manner; or directly storing the event frame matrix. A specific storage manner in each storage method is described below. Details are not described herein.

In some embodiments, according to the event data processing method provided in this application, a reading device 130 can further obtain an RoI, and can read whether there is an event at a pixel in the RoI in the event frame matrix and a specific event polarity from the storage device 120 based on the RoI and the method for storing the event frame matrix. In other words, the reading device 130 can directly determine a to-be-read pixel range from the event frame matrix based on the RoI, and then read whether there is an event at the pixel in the RoI and a specific event polarity. In this way, the reading device 130 does not need to traverse the event data to sequentially determine whether coordinates of each piece of event data fall within the RoI. In this way, efficiency of reading the event polarity of the pixel in the RoI is improved.

The event data processing method provided in this application is described below in detail with reference to FIG. 3. As shown in FIG. 3, the method includes the following steps.

S310: An event camera 110 generates a plurality of pieces of event data.

The event camera 110 detects a light intensity change within a shooting range through a sensor, and then outputs pixel coordinates at which a brightness change occurs, a timestamp, and a brightness change status as event data.

The event data includes a pixel location, a timestamp, and a pixel brightness change status. A single piece of event data may be represented by using $(x,y,p,t)$, where x and y are a location at which an event occurs, that is, pixel coordinates, P represents a pixel brightness change status, and t is a timestamp of occurrence of the event. If there are a total of N pieces of event data within a preset time T, the N pieces of event data may be represented by using

$$(x_k, y_k, p_k, t_k)_{k=1}^N.$$

For example, P may be represented by using "0" and "1", where 0 indicates that pixel brightness is decreased, and 1 indicates that pixel brightness is increased; or P may be represented by using "-1" and "1", where -1 indicates that pixel brightness is decreased, and 1 indicates that pixel brightness is increased. It should be understood that a method for representing the pixel brightness change status is not specifically limited in this application.

S320: A storage device 120 obtains a plurality of pieces of event data within a preset time period from the event camera 110.

The event camera 110 continuously generates event data, and sends the event data to the storage device 120 for storage. The storage device 120 stores the plurality of pieces of event data within the preset time period together. Therefore, the storage device 120 may first obtain the event data within the preset time period, store the event data within the preset time period, and then obtain event data within a next preset time period. The storage device 120 may further group all event data into a plurality of event data groups based on the preset time period, and sequentially store all the event data groups. It should be understood that a manner in which the storage device 120 obtains the event data is not specifically limited in this application.

S330: The storage device 120 generates an event frame matrix based on the plurality of pieces of event data within the preset time period.

The storage device 120 determines, based on an overall brightness change status of each pixel within the preset time period, whether there is an event at each pixel, and determines a specific event polarity if there is an event, to obtain the event frame matrix. The event polarity includes increased brightness and decreased brightness. If brightness of a pixel is not changed, there is no event. A location of each matrix element in the event frame matrix represents pixel coordinates, and a value of the matrix element indicates whether there is an event at a corresponding pixel and a specific event polarity. The preset time period may be set based on a requirement in an application scenario, and may specifically range from 1 millisecond to 100 milliseconds. For an application scenario with a high precision requirement, the preset time may be set to be short. For an application scenario with a low precision requirement, the preset time may be set to be long. In this way, the preset time period can meet a precision requirement in an application scenario.

Specifically, in the event data, an increase in pixel brightness is referred to as a positive event, and a decrease in pixel brightness is referred to as a negative event. The event data is generated after a pixel brightness change exceeds a threshold, and is specifically obtained through comparison after a logarithm of a brightness value is taken. It may be understood that each positive event corresponds to a same brightness increase amount, and each negative event corresponds to a same brightness decrease amount. Therefore, when a quantity of positive events at each pixel within the preset time T is greater than a quantity of negative events, an event polarity of the pixel within the preset time T is that brightness is increased; when a quantity of positive events at each pixel within the preset time T is less than a quantity of negative events, an event polarity of the pixel within the preset time T is that brightness is decreased; or when a quantity of positive events at each pixel within the preset time T is equal to a quantity of negative events, including a case in which there is no positive event and no negative event, that is, both the quantity of positive events and the quantity of negative events are zero, there is no event at the pixel within the preset time T. Finally, the event frame matrix can be determined based on whether there is an event at each pixel, a specific event polarity, and a pixel location.

For example, when P that is -1 indicates that the pixel brightness is decreased, P that is equal to 1 indicates that the pixel brightness is increased, the value Q, of the matrix element, that is -1 indicates that the pixel brightness is decreased, Q that is equal to 0 indicates that the pixel brightness is not changed, and Q that is equal to 1 indicates that the pixel brightness is increased, where the value Q of the matrix element in the event frame matrix is determined based on a sum of P values of the pixel in all event data within the preset time T. When the sum of the P values is less than 0, the value Q of the matrix element is -1; when the sum of the P values is equal to 0, the value Q of the matrix element is 0; or when the sum of the P values is greater than 0, the value Q of the matrix element is 1. In this case, a value of each matrix element in the event frame matrix may be calculated by using a sign function. As shown in a formula (1), it is assumed that an image pixel obtained by the event camera is W×H, that is, the event frame matrix F includes a total of H rows and W columns, where H and W are positive integers. The formula (1) shows a manner of calculating a matrix element $F[i,j]$ in an $i^{th}$ row and a $j^{th}$ column, where $0 \leq i$<H, $0 \leq j$<W, and $i$ and $j$ are positive integers.

$$F[i, j] = sign(\sum_{k=1}^{N} p_k 1_{x_k=i, y_k=j}) \qquad (1)$$

In conclusion, the storage device 120 collects statistics on a brightness change of each pixel within a specific time period, to obtain an overall brightness change result of each pixel, and then stores overall brightness change results corresponding to all the pixels as an event frame matrix based on locations of the pixels. This reduces a data amount, thereby reducing occupied storage space.

S340: The storage device 120 determines, based on a quantity of pixels, a manner of storing the event frame matrix, and stores the event frame matrix.

The storage device 120 determines, based on the quantity of pixels, that is, a quantity of matrix elements in the event frame matrix, the manner of storing the event frame matrix. A plurality of preset methods for storing the event frame matrix are provided in this method. The storage device 120 may first calculate an amount of storage space occupied in each storage manner, and then select a method in which a smallest amount of storage space is occupied, to store the event frame matrix.

The method for storing the event frame matrix includes: storing coordinates and a corresponding event polarity of a matrix element with an event in the event frame matrix; or storing an accumulated quantity of matrix elements with an event in each row and all previous rows of the row in the event frame matrix, and a column coordinate and a corresponding event polarity of a matrix element with an event in the event frame matrix; or dividing the event frame matrix into a plurality of submatrices, and storing coordinates of a start matrix element in each submatrix, a matrix element with an event in each submatrix, and a corresponding event polarity; or directly storing the event frame matrix.

Each method for storing the event frame matrix and space occupied in each storage method are described below in detail.

It is assumed that the event frame matrix F includes a total of H rows and W columns, and there are a total of E matrix elements with an event in the event frame matrix F, where E is a positive integer. A bit width of W is denoted as $B_W$, a bit width of H is denoted as $B_H$, a bit width of the total event quantity E is denoted as $B_E$, an event polarity of the matrix element with an event is denoted as $Q'$, and a bit width of $Q'$ is denoted as $B_{Q'}$. The bit width is a minimum quantity of bits for recording the positive integer, and may be obtained by taking a base-2 logarithm of the positive integer. It should be understood that there are a total of two possibilities, including that brightness is decreased and brightness is increased, for the event polarity $Q'$. In this case, $Q'$ is usually recorded by using 1 bit, that is, $B_{Q'}$ is equal to 1.

When the storage manner is storing the coordinates and the event polarity of the matrix element with an event in the event frame matrix, that is, storing a horizontal coordinate, a vertical coordinate, and the event polarity of the matrix element with an event, each pixel needs to be recorded by using $\beta$-bit data, where $\beta$ is equal to a sum of $B_W$, $B_H$, and $B_{Q'}$. There are a total of E matrix elements with an event. In this case, space $S_1$ occupied in the storage method is a product of E and $\beta$. For example, for a manner of calculating $\beta$, refer to the following formula (2), and for a manner of calculating $S_1$, refer to the following formula (3):

$$\beta = B_W + B_H + B_{Q'} = B_W + B_H + 1 \qquad (2)$$

$$S_1 = E * \beta \qquad (3)$$

The storage manner is storing the accumulated quantity of matrix elements with an event in each row and all the previous rows of the row in the event frame matrix, and the column coordinate and the corresponding event polarity of the matrix element with an event in the event frame matrix. In this case, details are as follows: A quantity of matrix elements with an event in first i rows is first recorded by using H+1 numbers, where an $(i + 1)^{th}$ number records the quantity of matrix elements with an event in the first i rows in the matrix ($0 \leq i$<H), and each of the H+1 numbers needs $B_E$ bits. Then, the column coordinate and the event polarity of the matrix element with an event are recorded by using E numbers, and each of the E numbers needs $B_W + B_{Q'}$ bits. In this case, for a manner of calculating space $S_2$ occupied in the storage method, refer to the following formula (4):

$$S_2 = (H + 1) * B_E + E * (B_W + B_{Q'}) \qquad (4)$$

In some embodiments, the storage manner may alternatively be storing a quantity of matrix elements with an event in each row in the event frame matrix, and a column coordinate and a corresponding event polarity of a matrix element with an event in the event frame matrix. In this case, details are as follows: A quantity of matrix elements with an event in an $i^{th}$ row is first recorded by using H numbers, where an $(i + 1)^{th}$ number records the quantity of matrix elements with an event in the $i^{th}$ row in the matrix ($0 \le i < H$), and each of the H numbers needs $B_W$ bits. Then, the column coordinate and the event polarity of the matrix element with an event are recorded by using E numbers, and each of the E numbers needs $B_W + B_{Q'}$ bits. In this case, for a manner of calculating space $S_2'$ occupied in the storage method, refer to the following formula (5):

$$S_2' = H \times B_W + E \times (B_W + B_{Q'}) \tag{5}$$

The storage manner is dividing the event frame matrix into a plurality of submatrices, first determining a storage manner of storing the submatrix and a size of storage space that needs to be occupied for storing the submatrix, then storing coordinates of a location at which each submatrix is stored in the storage space, and storing a matrix element with an event and a corresponding event polarity in each submatrix in the determined storage manner.

In this case, details are as follows: If a size of the submatrix is $h'$ rows and $w'$ columns, the event frame matrix F may be divided into $n_h \times n_w$ submatrices, and a quantity of matrix elements with an event in each submatrix is denoted as $e'$, where $n_h$ is equal to $H/h'$, and $n_w$ is equal to $W/w'$. A bit width of $w'$ is $B_{w'}$, and a bit width of $h'$ is $B_{h'}$.

For the submatrix, it may be recorded, by using $h' \times w'$ bits, whether there is an event at all matrix elements in the submatrix, and then the event polarity of the matrix element with an event may be recorded by using $e'$ bits. A total of $w' \times h' + e'$ bits are required. Alternatively, for the submatrix, coordinates and the event polarity of the matrix element with an event in the submatrix are recorded by using $\alpha$ bits, where $\alpha$ is equal to a sum of $B_{w'}$, $B_{h'}$, and $B_{Q'}$. A manner of storing the submatrix may be determined based on the quantity $e'$ of matrix elements with an event in each submatrix. When amounts of space occupied in the two submatrix storage manners are equal, for a value of $e'$, refer to a result of $e_0$ in a formula (6):

$$e_0 = \frac{w'h'}{B_{w'} + B_{h'} + B_{Q'} - 1} \tag{6}$$

When the quantity $e'$ of matrix elements with an event in the submatrix is greater than $e_0$, a smaller amount of storage space is occupied in the storage manner in which it is recorded, by using $h' \times w'$ bits, whether there is an event at all the matrix elements in the submatrix, and then the event polarity of the matrix element with an event is recorded by using $e'$ bits. When the quantity $e'$ of matrix elements with an event is less than or equal to $e_0$, a smaller amount of storage space is occupied in the storage manner in which the coordinates and the event polarity of the matrix element with an event in the submatrix are recorded by using $\alpha$ bits.

After storage manners of all the submatrices are determined, a size of storage space occupied by all the submatrices may be determined. Start locations of all the submatrices in the storage space are first recorded by using $n_{h'} \times n_{w'} + 1$ numbers. In this case, a start location and an end location of an $m^{th}$ submatrix in the storage space may be obtained by reading an $m^{th}$ number and an $(m + 1)^{th}$ number. Then, the matrix elements in each submatrix are separately stored in the determined submatrix storage manner. A total size of occupied space is denoted as D, and a bit width of D is denoted as $B_D$. In this case, for a manner of calculating space $S_3$ occupied in the storage method, refer to the following formula (7):

$$S_3 = (n_{h'} \times n_{w'} + 1) \times B_D + \sum_{m=1}^{n_{h'} \times n_{w'}} min((B_{w'} + B_{h'} + B_{Q'})e_m', w' \times h' + e_m') \tag{7}$$

In some embodiments, after storage manners of all the submatrices are determined, sizes of storage space occupied by all the submatrices may be first recorded by using $n_{h'} \times n_{w'}$ numbers. Then, the matrix elements in each submatrix are separately stored in the determined submatrix storage manner. A bit width of the size of space occupied by each submatrix is $B_{2*h'*w'}$. In this case, for a manner of calculating space $S_3'$ occupied in the storage method, refer to the following formula (8):

$$S_3' = n_{h'} \times n_{w'} \times B_{2*h'*w'} + \sum_{m=1}^{n_{h'} \times n_{w'}} min\left(\left(B_{w'} + B_{h'} + B_{Q'}\right)e_m', w' * h' + e_m'\right) \qquad (8)$$

When the storage manner is directly storing the event frame matrix F, for a manner of calculating space $S_4$ occupied in the storage method, refer to the following formula (9):

$$S_4 = H \times W \times 2 \qquad (9)$$

In some embodiments, after the event frame matrix is stored, when the event frame matrix needs to be processed, the storage device 120 further reads the event frame matrix, or reads some content of the event frame matrix, for example, reads an event polarity of a matrix element in a region of interest RoI. Reading of the event polarity of the matrix element in the RoI is described below in detail. It should be understood that for reading of complete data of the event frame matrix, refer to the following descriptions of reading of the event polarity of the matrix element in the RoI. Details about reading the complete data of the event frame matrix are not described herein.

S350: A reading device 130 obtains an RoI, and reads an event at a pixel in the RoI from the storage device 120.

The reading device 130 obtains the RoI. The RoI may be any region in a picture shot by the event camera, for example, a region selected when a user views, by using the reading device 130, the picture shot by the event camera, or a region generated by an application program (for example, an image viewing program, an image processing program, or the like) in the reading device 130. The reading device 130 determines a matrix element range of the RoI in the event frame matrix based on the RoI, and reads an event polarity of each pixel in the RoI based on the RoI and the manner of storing the event frame matrix.

A method that is for reading the event polarity of each pixel in the RoI and that corresponds to each manner of storing the event frame matrix is described below in detail.

When the storage manner is storing the pixel coordinates and the event polarity corresponding to the matrix element with an event in the event frame matrix, the reading device 130 may determine, based on the RoI, a range of a horizontal coordinate and a vertical coordinate of a matrix element that needs to be obtained, and the reading device 130 reads an event polarity of a matrix element in the RoI, and outputs a reading result.

It should be understood that in the storage manner, only the event polarity of the matrix element with an event can be read as that brightness is decreased or brightness is increased, and brightness of a pixel corresponding to a matrix element, in the RoI, whose event polarity is not read is not changed. In some embodiments, a matrix element whose event polarity is not read is further marked as brightness not changed, and then event data of all matrix elements in the RoI is output together.

When the storage manner is storing the accumulated quantity of matrix elements with an event in each row and all the previous rows of the row in the event frame matrix, and the column coordinate and the corresponding event polarity of the matrix element with an event in the event frame matrix, the reading device 130 performs reading on a per-row basis. In this case, details are as follows: A row intersecting with the RoI is first determined. For an $i^{th}$ row, an $i^{th}$ number and an $(i + 1)^{th}$ number are directly read to obtain a quantity of events in the row and a storage location of a column coordinate and an event polarity, a column coordinate and an event polarity of each matrix element in the row of data are read, and then a column intersecting with the RoI is determined, to determine a matrix element that needs to be output and a corresponding column coordinate.

When the storage manner is storing the quantity of matrix elements with an event in each row in the event frame matrix, and the column coordinate and the corresponding event polarity of the matrix element with an event in the event frame matrix, for an $i^{th}$ row, the reading device 130 needs to read first $i + 1$ numbers to obtain a quantity of events in the row and a storage location of a column coordinate and an event polarity, read a column coordinate and an event polarity of each matrix element in the row of data, and then determine a column intersecting with the RoI, to determine a matrix element that needs to be output and a corresponding column coordinate.

Similarly, only the matrix element with an event is read in the storage manner. In some embodiments, a matrix element whose event polarity is not read is further marked as brightness not changed, and then event data of all matrix elements in the RoI is output together.

When the storage manner is dividing the event frame matrix into a plurality of submatrices, first determining a storage manner of storing the submatrix and a size of storage space that needs to be occupied for storing the submatrix, then storing coordinates of a location at which each submatrix is stored in the storage space, and storing a matrix element with an event and a corresponding event polarity in each submatrix in the determined storage manner, the reading device 130 performs reading on a per-submatrix basis. In this case, details are as follows: A submatrix intersecting with the RoI is first determined. For an $m^{th}$ matrix, an $m^{th}$ number and an $(m + 1)^{th}$ number are directly read to obtain a start location and an end location of the submatrix. Coordinates and an event polarity of a matrix element in each intersecting submatrix are read based on a manner of storing the intersecting submatrix.

The reading device 130 may determine, based on the size of space occupied for storing the matrix, the storage manner used for the submatrix. A critical point of the space occupied by the two submatrices is $S_0$. When the storage space occupied by the submatrix is greater than $S_0$, it is recorded, by using $h' \times w'$ bits, whether there is an event for values of all the matrix elements in the submatrix, and then the event polarity of the matrix element with an event is recorded by using $e'$ bits. When the storage space occupied by the submatrix is less than $S_0$, the storage manner in which the coordinates and the event polarity of the matrix element with an event in the submatrix are recorded by using $\alpha$ bits is used. For example, for a manner of calculating $S_0$, refer to the following formula (10):

$$S_0 = \left( w'h' / B_{w'} + B_{h'} + B_{Q'} - 1 \right)(B_{w'} + B_{h'} + 1) \qquad (10)$$

When it is recorded, by using h' × w' bits, whether there is an event for the values of all the matrix elements in the submatrix, and then the event polarity of the matrix element with an event is recorded by using $e'$ bits, the matrix element with an event is first determined based on the $h' \times w'$ bits, and then it is determined, based on the $e'$ bits, that a specific event polarity is that brightness is increased or decreased. For a matrix element whose brightness is not changed in the $h' \times w'$ bits, information indicating that brightness of a pixel corresponding to the matrix element is not changed is directly output. In this way, an event polarity of each matrix element in the submatrix intersecting with the RoI can be obtained.

When the coordinates and the event polarity of the matrix element with an event in the submatrix are recorded by using $\alpha$ bits, the coordinates and the event polarity of the matrix element with an event in the submatrix can be obtained by directly reading data of each submatrix. Brightness of a matrix element that is not recorded is not changed. In this way, an event polarity of each matrix element in the submatrix intersecting with the RoI can be obtained.

If the sizes of storage space occupied by all the submatrices are recorded by using $n_{h'} \times n_{w'}$ numbers, for an $m^{th}$ matrix, first $m + 1$ numbers need to be read to obtain a start location and an end location of the submatrix. Then, coordinates and an event polarity of a matrix element in each intersecting submatrix are read based on a manner of storing the intersecting submatrix.

When the storage manner is directly storing the event frame matrix F, data of all pixels corresponding to the RoI region may be directly read, to determine and output an event polarity of each matrix element.

In conclusion, according to the event data processing method provided in this application, the storage device 120 obtains event data within a preset time period, collects statistics on a brightness change of each pixel within the preset time period, to obtain an overall brightness change result of each pixel, and then stores overall brightness change results corresponding to all the pixels as an event frame matrix based on locations of the pixels. In this way, a data amount is reduced, thereby reducing occupied storage space. Then, a storage manner in which a smallest amount of space is occupied for storing the event frame matrix is determined based on the event frame matrix. This can also reduce the occupied storage space. In addition, the event frame matrix is stored based on coordinates of a matrix element in the event frame matrix. Therefore, when reading some data of the event frame matrix, the reading device 130 does not need to traverse all stored data, and can directly determine a storage location of the matrix element coordinates and an event polarity based on a range that needs to be read, thereby improving efficiency of reading the event data.

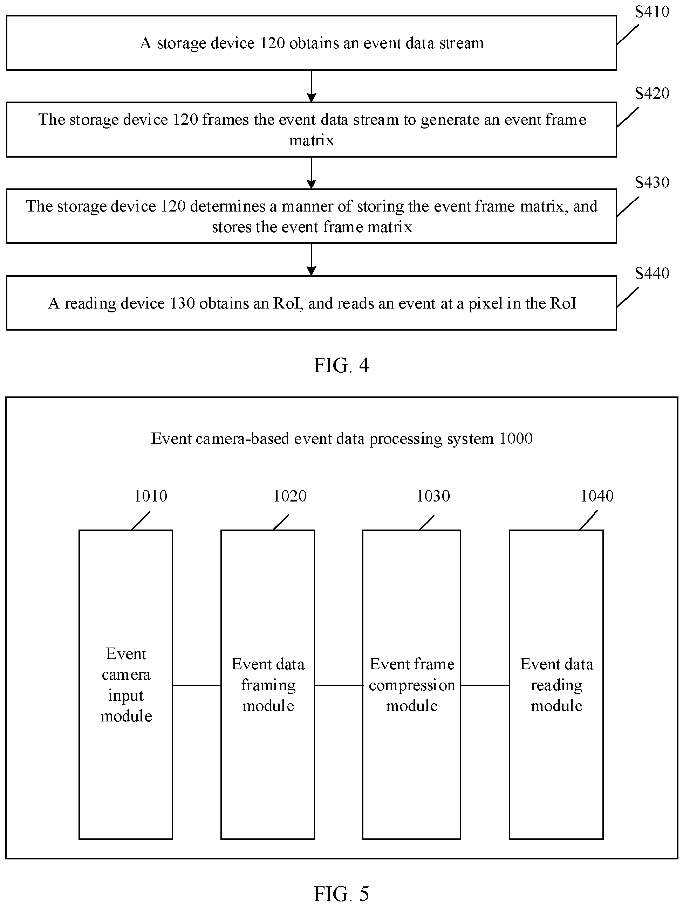

For ease of understanding the event data processing method provided in this application, the event data processing method is described below by using an example and with reference to FIG. 4.

S410: A storage device 120 obtains an event data stream.

The storage device 120 obtains an event data stream output by an event camera. Each piece of event data in the event data stream includes a pixel location, a timestamp, and a pixel brightness change status. The event data may be represented by using $(x,y,p,t)$. For details, refer to step S310 in which an event camera 110 generates a plurality of pieces of event data and step S320 in which a storage device 120 obtains a plurality of pieces of event data within a preset time period from the event camera 110. Table 1 shows an obtained event data stream, including a total of five pieces of event data. Resolution of the event camera is H=2 and W=2, a format of the timestamp t is year-date-hour+minute+second-microsecond, and P is represented by using "-1" and "1", where -1 indicates that pixel brightness is decreased, and 1 indicates that pixel brightness is increased.

**Table 1**

| Event number | t | x | y | p |
|---|---|---|---|---|
| 1 | 2022-0411-112233-262600 | 1 | 1 | +1 |
| 2 | 2022-0411-112233-263200 | 1 | 2 | +1 |
| 3 | 2022-0411-112233-264300 | 1 | 1 | -1 |
| 4 | 2022-0411-112233-265300 | 2 | 1 | -1 |

(continued)

| Event number | t | x | y | p |
|---|---|---|---|---|
| 5 | 2022-0411-112233-267900 | 1 | 1 | +1 |

S420: The storage device 120 frames the event data stream to generate an event frame matrix.

The storage device 120 frames the event data stream for a preset time period of 5 milliseconds, and frames data within 5 milliseconds starting from a first event (that is, a time window parameter is T=5 ms). A quantity of microseconds in the timestamp of the event 1 is 262600 $\mu$s, that is, 262.6 ms. Therefore, a time window includes all events within 262.6 ms to 267.6 ms, that is, four events with event numbers 1, 2, 3, and 4 fall within the time window. After framing, a 2×2 event frame shown in Table 2 may be obtained.

Both the event 1 and the event 3 are events at a pixel at coordinates (1, 1). The brightness change statuses of the event 1 and the event 3 are added, and it may be obtained that an event polarity of the pixel at the coordinates (1, 1) is 0 within the preset time period of 5 milliseconds, that is, brightness is not changed.

**Table 2**

| x=1, y=1, and value=0 | x=2, y=1, and value=-1 |
|---|---|
| x=1, y=2, and value=+1 | x=2, y=2, and value=0 |

The event frame shown in Table 2 may be further represented as an event frame matrix F', and F' is shown in the following formula (11):

$$F' = \begin{bmatrix} 0 & -1 \\ 1 & 0 \end{bmatrix} \tag{11}$$

S430: The storage device 120 determines a manner of storing the event frame matrix, and stores the event frame matrix.

For details about the manner of storing the event frame matrix, refer to step S340 in which the storage device 120 determines, based on a quantity of pixels, a manner of storing the event frame matrix, and stores the event frame matrix. Storage space occupied by the event frame matrix F' in each storage manner is described below in detail by using an example.

When the storage device 120 stores coordinates and an event polarity of a matrix element with an event in the event frame matrix F', because the event frame matrix F' includes a total of two rows and two columns, and there are only two matrix elements with an event, that is, H=2, W=2, and Q'=2, $B_W$=1, $B_H$=1, and $B_{Q'}$=1. Further, it may be determined, based on the formula (2), that 3 bits are required to store each pixel. Because there are two matrix elements, that is, matrix elements (2, 1) and (1, 2), with an event in the event frame matrix F', E=2. Further, it may be determined, based on the formula (3), that the storage device 120 needs 6 bits to store the event frame matrix F'.

When the storage device 120 stores an accumulated quantity of matrix elements with an event in each row and all previous rows of the row in the event frame matrix, and a column coordinate and a corresponding event polarity of a matrix element with an event in the event frame matrix, because the event frame matrix F' includes a total of two rows, an accumulated quantity of matrix elements whose brightness is changed in all rows needs to be first recorded by using three numbers, and each number needs 2 bits. Because there are two matrix elements with an event in the event frame matrix F', column coordinates and event polarities of the matrix elements whose brightness is changed need to be recorded by using two numbers, and each number needs 2 bits. In this case, it may be determined, based on the formula (4), that the storage device 120 needs 10 bits to store the event frame matrix F'.

When the storage device 120 divides the event frame matrix into a plurality of submatrices, and stores coordinates of a start matrix element in each submatrix, a matrix element with an event in each submatrix, and a corresponding event polarity, a size of the submatrix may be 2×2, that is, there is only one submatrix, and a location of a start matrix element in the data block needs to be stored by using two numbers.

Then, because the size of the submatrix may be 2×2, it may be recorded, by using 4 bits, whether there is an event for values of all matrix elements in the submatrix. In addition, because there are a total of two matrix elements with an event, event polarities of the matrix elements with an event are recorded by using 2 bits. In this case, the submatrix needs a total of 6 bits. Alternatively, for each matrix element in the submatrix, coordinates and an event polarity of a matrix element with an event in the submatrix are stored. There are a total of two matrix elements, and for each matrix element, 1 bit is required to record a horizontal coordinate, 1 bit is required to record a vertical coordinate, and 1 bit is required to record an event polarity. In this case, 6 bits are also required.

Therefore, for the storage manner, the storage device 120 needs 6 bits to store the submatrix, and 3 bits are required to record a size of storage space of the submatrix. In this case, it may be determined, based on the formula (7), that the storage device 120 needs 12 bits to store the event frame matrix F'.

When the storage device 120 directly stores the event frame matrix F', because the event frame matrix F' includes a total of two rows and two columns, based on the formula (9), the storage device 120 needs 8 bits to store the event frame matrix F'.

In conclusion, a smaller amount of storage space is occupied when the storage device 120 stores the event frame matrix F' in the first storage manner, that is, the electronic device stores the coordinates and the event polarity of the matrix element with an event in the event frame matrix F'.

S440: A reading device 130 obtains an RoI, and reads an event at a pixel in the RoI.

The reading device 130 obtains that the RoI is the coordinates (1, 1). Because the coordinates and the event polarity of the matrix element whose brightness is changed are stored when the storage device 130 stores the event frame matrix F' in the first storage manner, that is, (2, 1, -1) and (1, 2, +1) are stored, and because the coordinates (1, 1) fall outside a stored event list, the reading device 130 may determine that the brightness of the pixel at the coordinates (1, 1) is not changed. In this way, the event at the pixel in the RoI may be output as (1, 1, 0).

In conclusion, according to the event data processing method provided in this application, statistics on a brightness change of each pixel within a preset time period are collected, to obtain an overall brightness change result of each pixel, and an event frame matrix is generated. In this way, a data amount is reduced, thereby reducing occupied storage space. Then, a storage manner in which a smallest amount of space is occupied for storing the event frame matrix is determined based on the event frame matrix. This can also reduce the occupied storage space. In addition, the event frame matrix is stored based on coordinates of a matrix element in the event frame matrix. Therefore, when some data of the event frame matrix is read, there is no need to traverse all stored data, and a storage location of the matrix element coordinates and an event polarity can be directly determined based on a range that needs to be read, thereby improving efficiency of reading the event data.

Various storage manners in the event data processing method provided in this application are described below with reference to another example.

The event frame matrix is 1280*720 (a width is W=1280, and a height is H=720). The event frame matrix is divided into submatrices with a size of 16*8 (a width of a block is w'=16, and a height is h'=8), and a total of 1280/16*720/8=7200 submatrices may be obtained. It is assumed that there is one event at a first matrix element in each submatrix. In this case, $B_W=11$, $B_H=10$, $B_{w'}=4$, $B_{h'}=3$, $n_{h'}=90$, $n_{w'}=80$, E=7200, and $B_E=13$.

When the storage device 120 stores coordinates and an event polarity of a matrix element with an event in the event frame matrix, for each matrix element with an event, 11 bits are required to record a horizontal coordinate, 10 bits are required to record a vertical coordinate, and 1 bit is required to record an event polarity. Because there are a total of 7200 matrix elements with an event, a total of 7200*22=158400 bits are required in the storage manner.

When the storage device 120 performs storage based on an accumulated quantity of matrix elements with an event in all rows in the event frame matrix, and a column coordinate and a corresponding event polarity of a matrix element with an event in the event frame matrix, the accumulated quantity of matrix elements with an event in all the rows needs to be recorded by using 721 numbers, and each number needs 13 bits. Then, column coordinates and event polarities of matrix elements with an event are recorded by using 7200 numbers, 10 bits are required for the column coordinates, and 1 bit is required for the event polarity. Further, a total of 721*13+7200*11=88573 bits are required in the storage manner.

When the storage device 120 divides the event frame matrix into a plurality of submatrices, and stores coordinates of a start matrix element in each submatrix, a matrix element with an event in each submatrix, and a corresponding event polarity, for each submatrix, it is recorded, by using h' × w'=128 bits, whether values of all matrix elements in the submatrix correspond to a brightness change, and then an event polarity of a matrix element with an event is recorded by using 1 bit. In this case, a total of 129 bits are required. For each matrix element in the submatrix, coordinates and an event polarity of a matrix element with an event in the submatrix need to be recorded by using only $B_{w'}+B_{h'}+B_Q=8$ bits. Therefore, a smaller amount of space is occupied when the second submatrix storage manner is used.

There are a total of 7200 submatrices, and each submatrix needs 8 bits. Therefore, a total of 57600 bits are required, and 16 bits are required to store a size of occupied space. A total of (90*80+1)*16+7200*8=172816 bits are required in the storage manner.

When the storage device 120 directly stores the event frame matrix, 1280*720*2=1843200 bits are required.

Therefore, a smaller amount of space is occupied when the second storage manner is selected to store the event frame matrix.

In conclusion, according to the event data processing method provided in this application, a storage manner in which a smallest amount of space is occupied for storing the event frame matrix can be determined based on the event frame matrix. This can also reduce the occupied storage space.

To resolve a problem that event data occupies a large amount of storage space and efficiency of reading the event data is low, this application provides an event data processing system 1000. As shown in FIG. 5, the event data processing system 1000 includes an event camera input module 1010, an event data framing module 1020, an event frame compression module 1030, and an event data reading module 1040.

The event camera input module 1010 is configured to obtain event data output by an event camera, where the event data includes a pixel location, a timestamp, and a pixel brightness change status, and is specifically configured to perform the method described in step S310 and step S320. Details are not described herein.

The event data framing module 1020 is configured to determine an event polarity of each pixel based on an overall brightness change status of each pixel within a preset time period, to obtain an event frame matrix, and is specifically configured to perform the method described in step S330. Details are not described herein.

The event frame compression module 1030 is configured to determine, based on a quantity of pixels, that is, a quantity of matrix elements in the event frame matrix, a manner of storing the event frame matrix, and is specifically configured to perform the method described in step S340. Details are not described herein.

The event data reading module 1040 is configured to: obtain an RoI, determine a matrix element range corresponding to the RoI in the event frame matrix, and read an event polarity of each pixel in the RoI based on the RoI and the manner of storing the event frame matrix, and is specifically configured to perform the method described in step S350. Details are not described herein.

In conclusion, according to the event data processing system provided in this application, statistics on a brightness change of each pixel within a preset time period are collected, to obtain an overall brightness change result of each pixel, and an event frame matrix is generated. In this way, a data amount is reduced, thereby reducing occupied storage space. Then, a storage manner in which a smallest amount of space is occupied for storing the event frame matrix is determined based on the event frame matrix. This can also reduce the occupied storage space. In addition, the event frame matrix is stored based on coordinates of a matrix element in the event frame matrix. Therefore, when some data of the event frame matrix is read, there is no need to traverse all stored data, and a storage location of the matrix element coordinates and an event polarity can be directly determined based on a range that needs to be read, thereby improving efficiency of reading the event data.

The method in embodiments of this application is described above in detail. To better implement the foregoing solutions in embodiments of this application, correspondingly, the following further provides a related device configured to collaboratively implement the foregoing solutions.

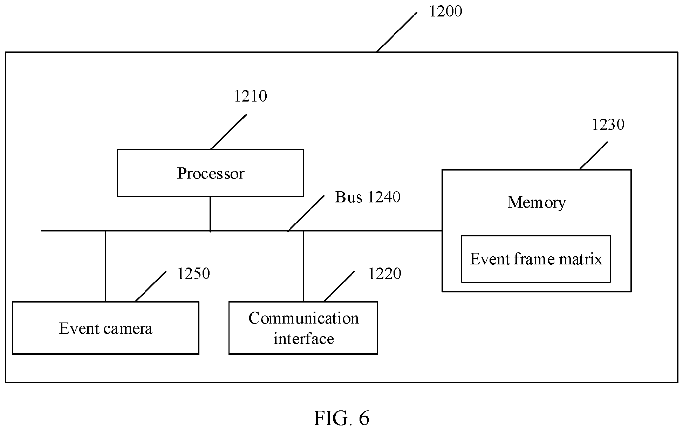

FIG. 6 is a diagram of a structure of an electronic device 1200 according to this application. The electronic device 1200 may be the event camera 110, the storage device 120, and the reading device 130 in the foregoing content, or a combination thereof. As shown in the figure, the electronic device 1200 includes a processor 1210, a communication interface 1220, a memory 1230, and an event camera 1250. The processor 1210, the communication interface 1220, the memory 1230, and the event camera 1250 may be connected to each other by using an internal bus 1240, or may implement communication by using another means such as wireless transmission.

In this embodiment of this application, an example in which a connection is implemented by using the bus 1240 is used. The bus 1240 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. The bus 1240 may be classified into an address bus, a data bus, a control bus, and the like. In addition to a data bus, the bus 1240 may further include a power bus, a control bus, a status signal bus, and the like. However, for clarity of description, various buses are marked as the bus 1240 in the figure.

The processor 1210 may include at least one general-purpose processor, for example, a central processing unit (Central Processing Unit, CPU), or a combination of a CPU and a hardware chip. The hardware chip may be an application-specific integrated circuit (Application-Specific Integrated Circuit, ASIC), a programmable logic device (Programmable Logic Device, PLD), or a combination thereof. The PLD may be a complex programmable logic device (Complex Programmable Logic Device, CPLD), a field-programmable gate array (Field-Programmable Gate Array, FPGA), generic array logic (Generic Array Logic, GAL), or any combination thereof. The processor 1210 executes various types of digital storage instructions, for example, a software or firmware program stored in the memory 1230, to enable the electronic device 1200 to provide a plurality of services.

The memory 1230 is configured to store program code and an event frame matrix, and the processor 1210 controls execution, to perform the processing steps of the event data processing method in the foregoing embodiments. The program code may include one or more software modules, and the one or more software modules may be the software modules provided in the embodiment in FIG. 6.

It should be noted that this embodiment may be implemented by a general-purpose physical server, for example, an ARM server or an X86 server, or may be implemented by a virtual machine that is implemented based on a general-purpose physical server in combination with an NFV technology. The virtual machine is a software-stimulated complete computer system that has a function of a complete hardware system and that runs in a fully isolated environment. This is not specifically limited in this application.

The memory 1230 may include a volatile memory (Volatile Memory), for example, a random access memory (Random Access Memory, RAM). The memory 1230 may further include a non-volatile memory (Non-Volatile Memory), for example, a read-only memory (Read-Only Memory, ROM), a flash memory (Flash Memory), a hard disk drive (Hard Disk Drive, HDD), or a solid-state drive (Solid-State Drive, SSD). The memory 1230 may further include a combination of the foregoing types. The memory 1230 may store program code, and specifically perform step S310 to step S350 in the embodiment in FIG. 3 and optional steps thereof. Details are not described herein.

The communication interface 1220 may be a wired interface (for example, an Ethernet interface), an internal interface (for example, a high-speed serial computer extended bus (Peripheral Component Interconnect express, PCIe) interface), a wired interface (for example, an Ethernet interface), or a wireless interface (for example, a cellular network interface or a wireless local area network interface), and is configured to communicate with another device or module.

It should be noted that FIG. 6 is merely a possible implementation of this embodiment of this application. In actual application, the electronic device 1200 may further include more or fewer components. This is not limited herein. For content that is not shown or not described in this embodiment of this application, refer to related descriptions in the embodiment in FIG. 3. Details are not described herein.

It should be understood that the electronic device shown in FIG. 6 may alternatively be a computer cluster including at least one server. This is not specifically limited in this application.

An embodiment of this application further provides a computer-readable storage medium. The computer-readable storage medium stores instructions. When the instructions are run on a processor, the method procedure shown in FIG. 3 is implemented.

An embodiment of this application further provides a computer program product. When the computer program product is run on a processor, the method procedure shown in FIG. 3 is implemented.

All or some of the foregoing embodiments may be implemented by using software, hardware, firmware, or any other combination. When software is used for implementation, all or some of the foregoing embodiments may be implemented in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium that can be accessed by a computer, or a data storage device, for example, a server or a data center including a set of one or more usable media. The usable medium may be a magnetic medium (for example, a floppy disk, a hard disk drive, or a magnetic tape), an optical medium (for example, a high-density digital video disc (Digital Video Disc, DVD)), or a semiconductor medium. The semiconductor medium may be an SSD.

The foregoing descriptions are merely specific implementations of the present invention, but are not intended to limit the protection scope of the present invention. Any equivalent modification or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  An event data processing method, comprising:

    obtaining, by a first electronic device, event data shot by an event camera, wherein the event data comprises a timestamp of occurrence of an event, pixel coordinates, and a brightness change status; and
    generating, by the first electronic device, an event frame matrix based on a plurality of pieces of event data within a preset time period, wherein a location of a matrix element in the event frame matrix corresponds to pixel coordinates, a value of the matrix element indicates whether there is an event at a corresponding pixel and an event polarity of a pixel with an event, if there is an event at the pixel, it indicates that brightness of the pixel is changed within the preset time period, or if there is no event at the pixel, it indicates that brightness of the pixel is not changed within the preset time period, and the event polarity comprises increased brightness and decreased brightness.

2.  The method according to claim 1, wherein the preset time period ranges from 1 millisecond to 100 milliseconds.

3. The method according to claim 1, wherein the method further comprises:

determining, by the first electronic device based on a quantity of pixels, a size of storage space occupied for storing the event frame matrix in each of a plurality of preset storage manners;
determining, by the first electronic device, a manner in which a smallest amount of storage space is occupied for storing the event frame matrix from the plurality of preset storage manners; and
storing, by the first electronic device, the event frame matrix in the manner in which a smallest amount of storage space is occupied for storing the event frame matrix.

4. The method according to claim 3, wherein the method further comprises:

obtaining, by a second electronic device, a region of interest RoI; and
reading, by the second electronic device, whether there is an event at a pixel in the RoI or an event polarity of a pixel with an event from the first electronic device based on the RoI and the manner of storing the event frame matrix.

5. The method according to claim 4, wherein
the preset storage manner comprises that the first electronic device stores coordinates and an event polarity of a pixel with an event in the event frame matrix.

6. The method according to claim 5, wherein the method further comprises:

determining, by the second electronic device, a matrix element coordinate range corresponding to the RoI in the event frame matrix based on the RoI; and
reading, by the second electronic device, coordinates and the event polarity of the pixel with an event in the RoI from the first electronic device based on the matrix element coordinate range.

7. The method according to claim 4, wherein

the preset storage manner comprises that the first electronic device stores a quantity of pixels with an event in each row and all previous rows in the event frame matrix, and a column coordinate and an event polarity of a pixel with an event in the event frame matrix; or
the first electronic device stores a quantity of pixels with an event in each row in the event frame matrix, and a column coordinate and a corresponding event polarity of a pixel with an event in the event frame matrix.

8. The method according to claim 7, wherein the method further comprises:

determining, by the second electronic device based on the event frame matrix, a row intersecting with the RoI, and reading a quantity of pixels with an event in the row intersecting with the RoI; and
reading, by the second electronic device, a column coordinate and the event polarity of the pixel with an event in the RoI from the first electronic device based on the quantity of pixels with an event in the row intersecting with the RoI, to obtain coordinates and the event polarity of the pixel with an event in the RoI.

9. The method according to claim 4, wherein

the preset storage manner comprises that the first electronic device divides the event frame matrix into a plurality of submatrices based on the event frame matrix, and stores a total size of storage space occupied by a previous submatrix and all previous submatrices, and coordinates and an event polarity of a pixel with an event in each submatrix; or
the first electronic device stores a size of storage space occupied by each submatrix, and coordinates and an event polarity of a pixel with an event in each submatrix.

10. The method according to claim 9, wherein the method further comprises:

determining, by the second electronic device based on the RoI, a submatrix intersecting with the RoI and a size of storage space occupied by the submatrix intersecting with the RoI;
determining, by the second electronic device based on the size of storage space of the submatrix intersecting with the RoI, a storage location for storing data of the submatrix intersecting with the RoI; and

reading, by the second electronic device, coordinates and an event polarity of a pixel with an event in the submatrix intersecting with the RoI from the first electronic device based on the storage location, to obtain coordinates and the event polarity of the pixel with an event in the RoI.

11. The method according to claim 4, wherein
the preset storage manner comprises that the first electronic device stores the event frame matrix.

12. The method according to claim 11, wherein the method further comprises:

determining, by the second electronic device, a matrix element coordinate range corresponding to the RoI in the event frame matrix based on the RoI; and
reading, by the second electronic device, whether there is an event at each pixel in the RoI and the event polarity of the pixel with an event from the first electronic device based on the matrix element coordinate range.

13. The method according to any one of claims 5 to 10, further comprising:
marking, by the second electronic device, a pixel without an event as brightness not changed based on the coordinates and the event polarity of the pixel with an event in the RoI, to learn whether there is an event at each pixel in the RoI and the event polarity of the pixel with an event.

14. An electronic device, comprising a processor and a memory, wherein the memory is configured to store instructions, the processor is configured to execute the instructions, and when the processor executes the instructions, the method according to any one of claims 1 to 13 is performed.

15. A computer program product, wherein the computer program product comprises computer instructions, and when the computer instructions are executed by an electronic device, the electronic device performs the method according to any one of claims 1 to 13.

16. A computer-readable storage medium, comprising instructions, wherein when the instructions are run on an electronic device, the electronic device is enabled to perform the method according to any one of claims 1 to 13.

FIG. 1A

FIG. 1B

FIG. 2

| | S310 |
|---|---|
| An event camera 110 generates a plurality of pieces of event data | |

| | S320 |
|---|---|
| A storage device 120 obtains a plurality of pieces of event data within a preset time period from the event camera 110 | |

| | S330 |
|---|---|
| The storage device 120 generates an event frame matrix based on the plurality of pieces of event data within the preset time period | |

| | S340 |
|---|---|
| The storage device 120 determines, based on a quantity of pixels, a manner of storing the event frame matrix, and stores the event frame matrix | |

| | S350 |
|---|---|
| A reading device 130 obtains an RoI, and reads an event at a pixel in the RoI from the storage device 120 | |

FIG. 3

| A storage device 120 obtains an event data stream | S410 |
| :--- | :--- |

| The storage device 120 frames the event data stream to generate an event frame matrix | S420 |
| :--- | :--- |

| The storage device 120 determines a manner of storing the event frame matrix, and stores the event frame matrix | S430 |
| :--- | :--- |

| A reading device 130 obtains an RoI, and reads an event at a pixel in the RoI | S440 |
| :--- | :--- |

FIG. 4

Event camera-based event data processing system 1000

| 1010 | 1020 | 1030 | 1040 |
| :--- | :--- | :--- | :--- |
| Event camera input module | Event data framing module | Event frame compression module | Event data reading module |

FIG. 5

1200

1210

Processor

1230

Bus 1240

Memory

1250

1220

Event frame matrix

Event camera

Communication
interface

FIG. 6

<table>
<tr><td colspan="2">**INTERNATIONAL SEARCH REPORT**</td><td>International application No.<br>**PCT/CN2023/102176**</td></tr>
</table>

**A.    CLASSIFICATION OF SUBJECT MATTER**

G06V 20/52(2022.01)i

According to International Patent Classification (IPC) or to both national classification and IPC

**B.    FIELDS SEARCHED**

Minimum documentation searched (classification system followed by classification symbols)

IPC: G06V, G06T, G06K, H04N

Documentation searched other than minimum documentation to the extent that such documents are included in the fields searched

Electronic data base consulted during the international search (name of data base and, where practicable, search terms used)

CNTXT; ENTXT; CNABS; DWPI; CJFD: event, time, pixel, brightness, luminance, luminosity, light intrnsity, brilliance, matrix, array, interest, attention, awareness, polarity, polar, memory space, storage space, 事件, 时间, 像素, 亮度, 矩阵, 阵列, 兴趣, 关注, 极性, 存储空间

**C.    DOCUMENTS CONSIDERED TO BE RELEVANT**

| Category* | Citation of document, with indication, where appropriate, of the relevant passages | Relevant to claim No. |
|---|---|---|
| X | CN 114584721 A (SAMSUNG ELECTRONICS CO., LTD.) 03 June 2022 (2022-06-03)<br>description, paragraphs [0003]-[0110], and figures 1-14 | 1-2, 14-16 |
| A | CN 109716392 A (CELEPIXEL TECHNOLOGY CO., LTD.) 03 May 2019 (2019-05-03)<br>see entire document | 1-16 |
| A | CN 110428477 A (WUHAN UNIVERSITY) 08 November 2019 (2019-11-08)<br>see entire document | 1-16 |
| A | US 2019014258 A1 (INTEL CORP.) 10 January 2019 (2019-01-10)<br>see entire document | 1-16 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 September 2023** | **18 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102176**

| Patent document cited in search report | | | Publication date (day/month/year) | Patent family member(s) | | | Publication date (day/month/year) |
|---|---|---|---|---|---|---|---|
| CN | 114584721 | A | 03 June 2022 | US | 2022172375 | A1 | 02 June 2022 |
| | | | | KR | 20220076944 | A | 08 June 2022 |
| | | | | US | 2023217123 | A1 | 06 July 2023 |
| CN | 109716392 | A | 03 May 2019 | US | 2021042939 | A1 | 11 February 2021 |
| | | | | US | 11532089 | B2 | 20 December 2022 |
| | | | | EP | 3779769 | A1 | 17 February 2021 |
| | | | | EP | 3779769 | A4 | 17 November 2021 |
| | | | | EP | 3779769 | B1 | 02 August 2023 |
| | | | | JP | 7031947 | B2 | 08 March 2022 |
| | | | | SG | 11202010898 | TA | 30 December 2020 |
| | | | | WO | 2019222911 | A1 | 28 November 2019 |
| | | | | JP | 2021523440 | W | 02 September 2021 |
| CN | 110428477 | A | 08 November 2019 | CN | 110428477 | B | 02 November 2021 |
| US | 2019014258 | A1 | 10 January 2019 | US | 10447920 | B2 | 15 October 2019 |

Form PCT/ISA/210 (patent family annex) (July 2022)

**EP 4 550 276 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210778563